# EUROPEAN PATENT APPLICATION

(11) **EP 4 672 203 A1**
(43) Date of publication of application: **31.12.2025**
(21) Application number: 25183010.5
(22) Date of filing: 16.06.2025
(51) Int. Cl.: G09B 11/00, G09B 5/02, G09B 5/08

(54) **HANDWRITING SYSTEM, HANDWRITING METHOD AND NON-TRANSITORY PROCESSING DEVICE-READABLE MEDIUM THEREOF**

(30) Priority: 27.06.2024 TW 113123945
(71) Applicant: Optoma Coporation, New Taipei City 231633 (TW)
(72) Inventor: CHU, Kuo-Hao, 231633 NEW TAIPEI CITY (TW)
(74) Representative: Ter Meer Steinmeister & Partner

(57) **Abstract**

A handwriting system including a teaching device (210) and a practicing device (230)is provided. The teaching device (210) is communicatively connected to a network (220) and displays a setup interface which includes a setup window (400) for obtaining practice settings. These practice settings are then transmitted to the network. The practicing device (230)is communicatively connected to the network and displays a user interface for obtaining handwriting information which is transmitted to the network. The practicing device (230) receives an inspection result from the network and displays a feedback message according to the inspection result. A handwriting method and a non-transitory processing device-readable medium are also disclosed.

## Description

This application claims priority of Taiwan application no. 113123945, filed on June 27, 2024.

### BACKGROUND

### Technical Field

The disclosure relates to a handwriting system that allows a teacher to define relevant settings to assist learners in practicing handwriting.

### Description of Related Art

Currently, in schools, when teachers teach handwriting, they mostly use traditional blackboards and chalks, and students' exercise books for handwriting practice are mainly paper-based. After homework on the exercise books is completed, teachers need to manually review and correct them. Manual correction is not only time-consuming but also has a problem of inconsistent correction standards, and the teachers cannot see students' handwriting processes and cannot correct them in time. If the students are not corrected immediately when they are practicing handwriting, they will make many mistakes in succession, making the efficiency of the practice decreases. Therefore, how to use terminal devices to assist teachers and students in handwriting practice has become a topic of concern to technicians in this field.

The information disclosed in this Background section is only for enhancement of understanding of the background of the described technology and therefore it may contain information that does not form the prior art that is already known to a skilled person. Further, the information disclosed in the Background section does not mean that one or more problems to be resolved by one or more embodiments of the disclosure was acknowledged by a person of ordinary skill in the art.

### SUMMARY

The disclosure is directed to a handwriting system, a handwriting method and a non-transitory processing device-readable medium thereof, which allow a teacher to perform settings of handwriting and determine whether the student's handwriting is qualified based on the settings.

Additional aspects and advantages of the present disclosure will be set forth in the description of the techniques disclosed in the present disclosure.

The object is solved by the features of the independent claims. Preferred embodiments are given in the dependent claims.

In order to achieve one or a portion of or all of the objects or other objects, an embodiment of the disclosure provides a handwriting system including a teaching device and a practicing device. The teaching device is communicatively connected to a network and displays a setup interface, and the setup interface includes a setup window, and the teaching device obtains a practice setting through the setup window, and transmits the practice setting to the network. The practicing device is communicatively connected to the network and displays a user interface, and the practicing device is configured to obtain handwriting information through the user interface, and transmit the handwriting information to the network. The practicing device is also configured to receive an inspection result from the network, and the practicing device is configured to display a feedback message according to the inspection result.

In one or more embodiments, the handwriting system may further include a server.

In one or more embodiments, the server may be is communicatively connected to the teaching device and the practicing device through the network.

In one or more embodiments, the server may be configured to determine whether the handwriting information is qualified according to the practice setting to generate the inspection result, and transmit the inspection result to the practicing device.

In one or more embodiments, the server may be configured to generate a report and transmit the report to the teaching device.

In one or more embodiments, the teaching device may be configured to display a report.

In one or more embodiments, the report may comprise at least one of a correct rate, a number of errors, and suggested content.

In one or more embodiments, the practice setting may include a stroke tolerance value.

In one or more embodiments, the handwriting information may include a practicing stroke.

In one or more embodiments, the server may be configured to obtain a model text, which includes at least one model stroke.

In one or more embodiments, the server may determine whether the practicing stroke is qualified relative to the model stroke according to the stroke tolerance value to generate the inspection result.

In on or more embodiments, the practicing stroke may include multiple practicing points.

In one or more embodiments, the model stroke may include multiple model points.

In one or more embodiments, the server may be configured to take the stroke tolerance value as a distance to generate a stroke range corresponding to the model points.

In one or more embodiments, the server may determine whether the practicing points are within the stroke range to determine whether the practicing stroke is qualified.

In one or more embodiments,, the practice setting may include a correct rate threshold.

In one or more embodiments, the server may be configured to determine a correct rate of the practicing points.

In one or more embodiments, if the correct rate is greater than the correct rate threshold, the server may determine that the practicing stroke is qualified.

In one or more embodiments,, the practice setting may include a target completion time, and the handwriting information may include a practicing text time.

In one or more embodiments, the server may be configured to determine whether the practicing text time is greater than the target completion time, and if yes, the server may determine that the handwriting information is unqualified.

In one or more embodiments, the user interface may be configured to display the model text.

In one or more embodiments, the practicing device may be configured to receive an operation of a stylus.

In one or more embodiments, the operation of the stylus may be performed on the user interface displaying the model text to generate the handwriting information.

In order to achieve one or a portion of or all of the objects or other objects, an embodiment of the disclosure provides a handwriting method applicable to a handwriting system. The handwriting system includes a teaching device and a practicing device. The handwriting method includes the following. A setup interface is displayed through the teaching device, where the setup interface has a setup window. A practice setting is obtained through the setup window. A user interface is displayed through the practicing device, and handwriting information is obtained through the user interface. Whether the handwriting information is qualified is determined according to the practice setting to generate an inspection result. A feedback message is displayed through the practicing device according to the inspection result.

In one or more embodiments, the practice setting may include a stroke tolerance value, and the handwriting information includes a practicing stroke, where determining whether the handwriting information is qualified according to the practice setting to generate the inspection result further includes the following steps.

In one or more embodiments, a model text may be obtained, where the model text includes at least one model stroke.

In one or more embodiments, whether the practicing stroke is qualified relative to the model stroke may be determined according to the stroke tolerance value to generate the inspection result.

In one or more embodiments,, the practicing stroke may include multiple practicing points, and the model stroke includes multiple model points.

In one or more embodiments, the handwriting method may further include the following. The stroke tolerance value may be taken as a distance to generate a stroke range corresponding to the model points, and whether the practicing points are within the stroke range may be determined to determine whether the practicing stroke is qualified.

In one or more embodiments, the practice setting may include a correct rate threshold.

In one or more embodiments, the handwriting method may further include the following. A correct rate of the practicing points may be determined. That the practicing stroke may be qualified is determined if the correct rate is greater than the correct rate threshold.

In one or more embodiments, the practice setting may include a target completion time, and the handwriting information may include a practicing text time, and the handwriting method may further include the following. Whether the practicing text time is greater than the target completion time may be determined, and if yes, that the handwriting information is unqualified is determined.

In one or more embodiments, the handwriting method may further include the following. The user interface may be displayed through the practicing device, where the user interface is configured to display the model text. An operation of a stylus may be received, where the operation of the stylus may be performed on the user interface displaying the model text to generate the handwriting information.

In one or more embodiments, the handwriting method may further include the following. A report may be generated and the report is transmitted to the teaching device, and the report may be displayed through the teaching device, where the report includes at least one of a correct rate, a number of errors and suggested content.

In order to achieve one or a portion of or all of the objects or other objects, an embodiment of the disclosure provides a handwriting system including a terminal device displaying a setup interface. The setup interface has a setup window, and the setup window is configured to receive a practice setting, a user interface is configured to be displayed by the terminal device and receive handwriting information, and the terminal device is configured to receive an inspection result, and the terminal device is configured to display a feedback message according to the inspection result.

In order to achieve one or a portion of or all of the objects or other objects, an embodiment of the disclosure provides a non-transitory processing device-readable medium for storing a virtual whiteboard program to perform a handwriting method including the following. A setup interface is displayed, where the setup interface has a setup window. A practice setting is obtained through the setup window. A user interface is displayed during handwriting practice, and handwriting information is obtained through the user interface. Whether the handwriting information is qualified is determined according to the practice setting to generate an inspection result. A feedback message is displayed according to the inspection result.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram illustrating a teaching scene according to an embodiment.
FIG. 2A is a schematic diagram showing a handwriting system according to an embodiment.
FIG. 2B is a schematic diagram illustrating devices of a handwriting system of an embodiment.
FIG. 3 is a schematic diagram illustrating a handwriting method according to an embodiment.
FIG. 4 is a schematic diagram illustrating a setup window according to an embodiment.
FIG. 5 is a schematic diagram of model texts.
FIG. 6 is a schematic diagram illustrating a practicing text according to an embodiment.
FIG. 7 is a schematic diagram of determining a stroke range according to an embodiment.
FIG. 8 is a schematic diagram illustrating a report according to an embodiment.
FIG. 9 is a schematic diagram illustrating another handwriting method of an embodiment.

### DESCRIPTION OF THE EMBODIMENTS

Some embodiments of the disclosure will be described in detail below with reference to the accompanying drawings. The element symbols referenced in the following description will be considered as the same or similar elements when the same element symbols appear in different drawings. These embodiments are only a part of the disclosure and do not disclose all possible embodiments of the disclosure. More precisely, these embodiments are merely examples of the system and method within the scope of the patent application of the disclosure.

In the following detailed description of the preferred embodiments, reference is made to the accompanying drawings which form a part hereof, and in which are shown by way of illustration specific embodiments in which the disclosure may be practiced. In this regard, directional terminology, such as "top," "bottom," "left," "right," "front," "back," etc., is used with reference to the orientation of the Figure(s) being described and are not intended to be limiting of the disclosure.

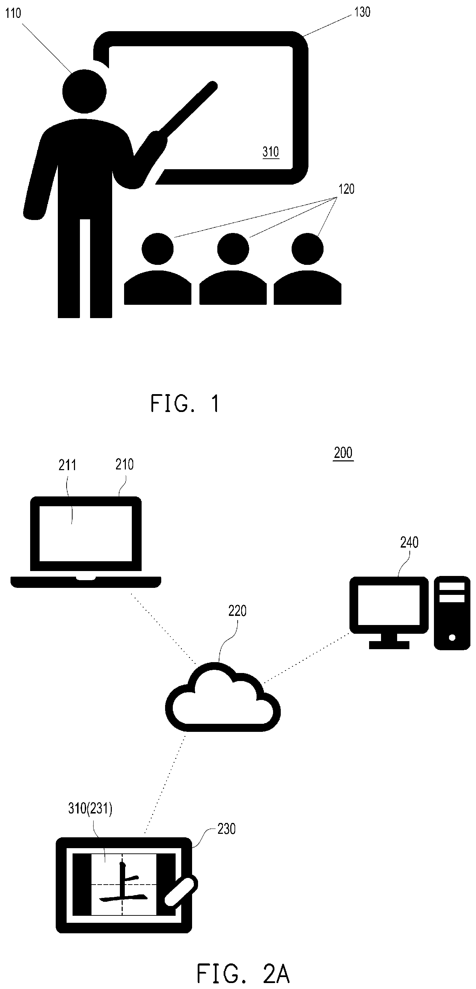

FIG. 1 is a schematic diagram illustrating a teaching scene according to an embodiment. Referring to FIG. 1, in an embodiment, the teaching scene includes a teacher 110, practitioners 120, and an electronic whiteboard 130. The electronic whiteboard 130 may provide both of a display function and a touch function, and the teacher 110 may teach handwriting of text on the electronic whiteboard 130. During a class, the practitioners 120 may write text on the electronic whiteboard 130, and a handwriting system of the disclosure may instantly remind the practitioners 120 if there are any wrong texts. The so-called text includes, for example, letters, single characters or words, which is not limited by the disclosure. In addition, after the class is over, the teacher 110 assigns a homework to the practitioners 120, and the homework includes practice of one or more texts, and each text needs to be practiced one or more times. Particularly, the handwriting system of the disclosure allows the teacher 110 to pre-set rules (practice settings) related to handwriting of the text, and when the practitioners 120 are writing, the handwriting system may remind the practitioner 120 in real-time if there are any wrong texts.

FIG. 2A is a schematic diagram showing a handwriting system according to an embodiment. Referring to FIG. 1 and FIG. 2A, a handwriting system 200 includes a teaching device 210, a practicing device 230, and a server 240, which are communicatively connected to each other through a network 220. The network 220 is, for example, the Internet. The teaching device 210 and the practicing device 230 may be respectively a personal computer, a tablet computer, a notebook computer, a mobile phone or other suitable terminal devices, but the disclosure is not limited thereto. The electronic whiteboard 130 of FIG. 1 is equipped with some internal components identical to those of the teaching device 210 or the practicing device 230.

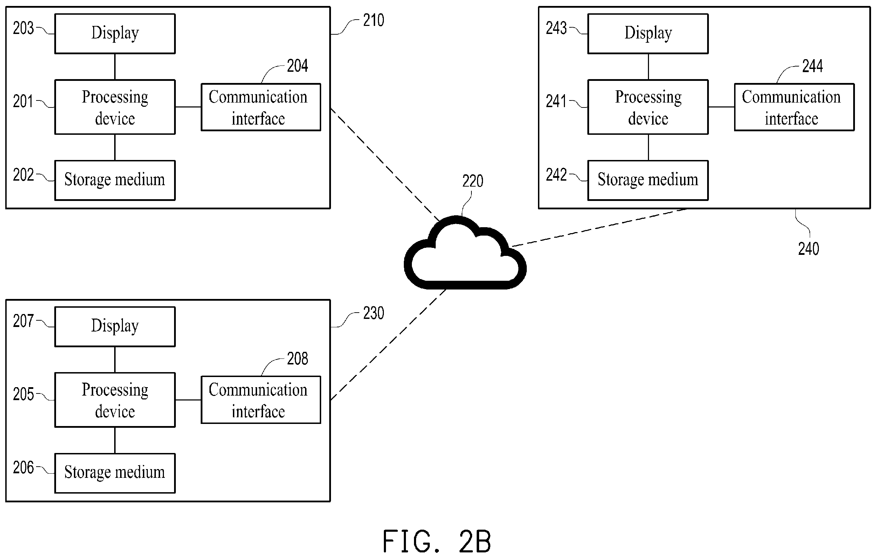

FIG. 2B is a schematic diagram illustrating devices of a handwriting system according to an embodiment. FIG. 2B further illustrates a specific internal structure of each device in FIG. 1.

The teaching device 210 includes a processing device 201, a storage medium 202, a display 203, and a communication interface 204. The processing device 201 includes, for example, at least one processor. The processor is, for example, a central processing unit (CPU), or other programmable general-purpose or special-purpose micro control unit (MCU), microprocessor, digital signal processor (DSP), programmable controller, application specific integrated circuit (ASIC), graphics processing unit (GPU), image signal processor (ISP) , image processing unit (IPU), arithmetic logic unit (ALU), complex programmable logic device (CPLD), field programmable gate array (FPGA), or other similar devices or combinations of the above devices. The processing device 201 is electrically connected to the display 203, the storage medium 202, and the communication interface 204 respectively, and the processing device 201 accesses and executes at least one application program or algorithm stored in the storage medium 202, such as a virtual whiteboard program.

The storage medium 202 is, for example, any type of fixed or removable random access memory (RAM), read-only memory (ROM), flash memory, hard disk drive (HDD), solid state drive (SSD) or similar devices or a combination of the above devices. The storage medium 202 is used to store non-transitory applications or algorithms that may be accessed by the processing device 201.

The communication interface 204 transmits or receives signals in a wireless or wired manner. The communication interface 204 may be communicatively connected to the practicing device 230 and the server 240 through a communication protocol of the network. The communication interface 204 is, for example, a wireless transceiver or a wired interface.

The display 203 is, for example, a liquid crystal display panel, a light emitting diode display panel, etc., which is not limited by the disclosure. The display 203 may further include a touch panel, so that the display 203 may receive operation instructions from a user. The display 203 is configured to display a setup interface 211.

The practicing device 230 includes a processing device 205, a storage medium 206, a display 207, and a communication interface 208. The server 240 includes a processing device 241, a storage medium 242, a display 243, and a communication interface 244. The processing device 205/241, the storage medium 206/242, the display 207/243, and the communication interface 208/244 may respectively have structures and functions similar to those of the processing device 201, the storage medium 202, the display 203, and the communication interface 204, and details thereof are not repeated. The storage medium 206/242 stores, for example, a virtual whiteboard program. To further explain, the storage medium 202/206/242 is a non-transitory processing device-readable medium. In the embodiment, the processing device 201/205/241 may access the storage medium 202/206/242.

Referring to FIG. 2A and FIG. 2B at the same time, the teaching device 210 is used by the teacher 110, the display 203 of the teaching device 210 displays the setup interface 211, the teacher 110 inputs a practice setting in the setup interface 211, the practice setting is transmitted to the network 220 via the communication interface 204, and is then transmitted to the communication interface 244 of the server 240. The practicing device 230 is used by the practitioner 120. The display 207 of the practicing device 230 displays a user interface 231. The practitioner 120 uses a stylus to write a practice text on the user interface 231. The processing device 205 of the practicing device 230 generates handwriting information according to the practice text input by the stylus, and transmits the handwriting information to the network 220 through the communication interface 208, and further transmits the same to the communication interface 244 of the server 240. The processing device 241 of the server 240 may determine whether the handwriting information is qualified according to the practice setting provided by the teaching device 210 operated by the teacher 110 to generate an inspection result, and the processing device 241 of the server 240 transmits the inspection result to the communication interface 208 of the practicing device 230 through the communication interface 244. In the other words, the processing device 241 of the server 240 may determine whether the handwriting information complies with at least one of the practice settings provided by the teaching device 210 operated by the teacher 110 to generate an inspection result, and the processing device 241 of the server 240 transmits the inspection result to the communication interface 208 of the practicing device 230 through the communication interface 244. The processing device 205 of the practicing device 230 controls the display 207 to display a feedback message based on the inspection result, such as a reminder message to remind the practitioner 120 whether there is any error, or to encourage the practitioner 120 that he/she has done well.

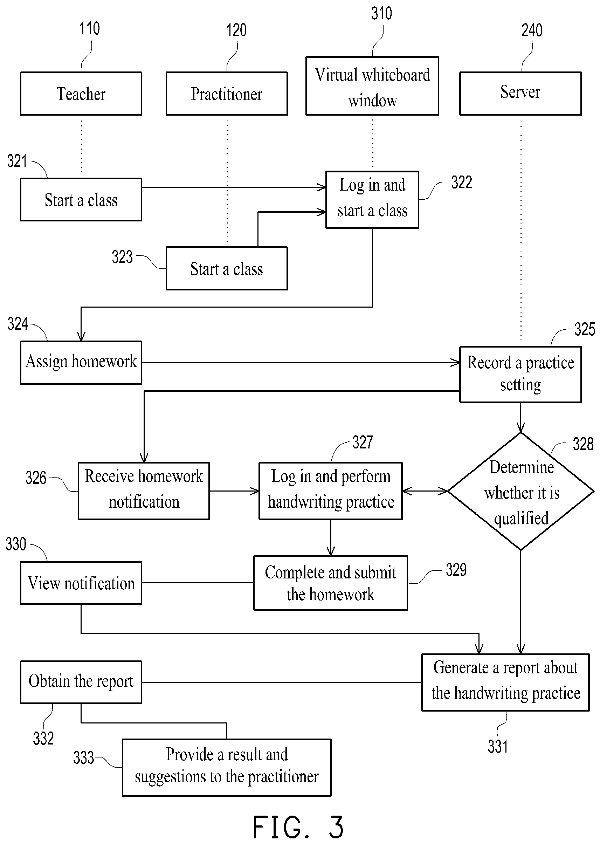

FIG. 3 is a schematic diagram illustrating a handwriting method according to an embodiment. Referring to FIG. 1 to FIG. 3, FIG. 3 illustrates an interactive scenario among the teacher 110, the practitioner 120, a virtual whiteboard window 310, and the server 240. Steps 321, 324, 330, and 332 correspond to the teacher 110. Steps 323, 326, and 333 correspond to the practitioner 120. Steps 322, 327, and 329 correspond to the virtual whiteboard window 310. Steps 325, 328, and 331 correspond to the server 240.

The virtual whiteboard program is software, which may be at least one application program or a cloud service program. The storage media 202/206/242 of the teacher device 210, the practicing device 230, and the server 240 may store the virtual whiteboard program as software. The processing devices 201/205/241 of the teaching device 210, the practicing device 230, and the server 240 access and execute the virtual whiteboard program. The processing device 201/205/241 accesses and executes the virtual whiteboard program, so that the displays 203/207 of the teaching device 210 and the practicing device 230 may display the virtual whiteboard window 310.

In the scenario of FIG. 1, the electronic whiteboard 130 is turned on and is communicatively connected to the server 240. In step 321, the teacher 110 starts a class. In step 322, the teacher 110 starts the class by executing the virtual whiteboard program via the processing device of the electronic whiteboard 130 to log into the server 240, causing the processing device 241 of the server 240 to execute the virtual whiteboard program and display the virtual whiteboard window 310 on the display of the electronic whiteboard 130. In step 323, the practitioner 120 also starts the class. In step 322, only the teacher 110 may log into the server 240, and the practitioner 120 does not need to log in. In other embodiments, in step 322, the teacher 110 uses the processing device of the electronic whiteboard 130 to execute a webpage opening operation and input a website to log into the server 240 executing the virtual whiteboard program, and the display of the electronic whiteboard 130 displays the virtual whiteboard window 310.

In the scenario of distance learning, in step 322, the teaching device 210 and the practicing device 230 may respectively execute the virtual whiteboard program, or log into the server 240 by opening a webpage and inputting a website, so that the display 203 of the teaching device 210 and the display 207 of the practicing device 230 may display the virtual whiteboard window 310. The teaching device 210 may be equipped with a microphone, a camera, etc., and may film class content of the teacher 110. The processing device 201 of the teaching device 210 generates class content data according to the class content, and transmits the class content data to the practicing device 230 through the network 220.

In another embodiment, during distance learning, the teacher 110 may also operate the electronic whiteboard 130, and a location where the electronic whiteboard 130 is located is also equipped with a camera and a microphone, and the class content data may also be transmitted to the remote practicing device 230 through the network 220. In this scenario, in step 322, the teaching device 210 of the teacher 110 executes the virtual whiteboard program to log into the server 240, the display 203 of the teaching device 210 of the teacher 110 displays the virtual whiteboard window 310, and the practicing device 230 of the practitioner 120 executes the virtual whiteboard program to log into the server 240, and the display 207 of the practicing device 230 of the practitioner 120 displays the virtual whiteboard window 310.

After the class is over, the process proceeds to step 324 where the teacher 110 assigns a homework. Specifically, the teacher 110 uses the teaching device 210 to execute the virtual whiteboard program to log into the server 240, and the display 203 of the teaching device 210 displays the virtual whiteboard window 310, where the virtual whiteboard window 310 includes the setup interface 211, and the setup interface 211 has a setup window. The teaching device 210 obtains a practice setting input by the teacher 110 through the setup window. Specifically, an account of the teacher 110 has authority to allow the teaching device 210 to display the setup interface 211.

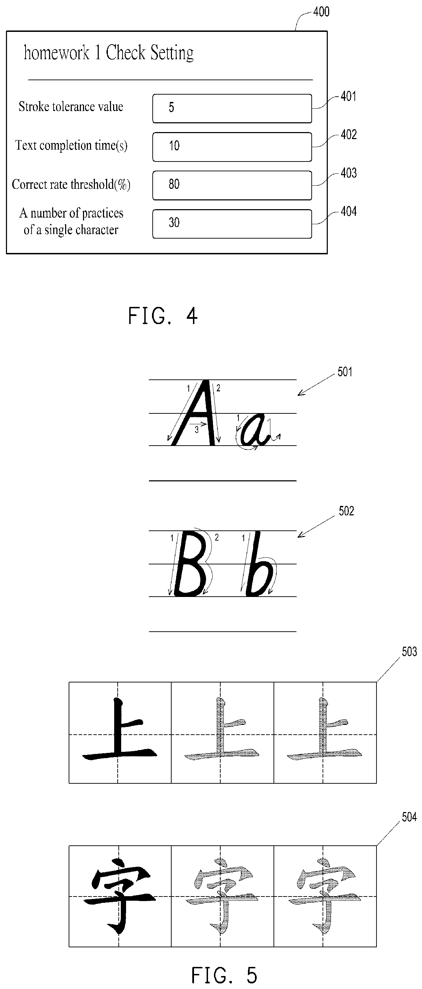

FIG. 4 is a schematic diagram illustrating a setup window according to an embodiment. Referring to FIG. 4, a setup window 400 includes fields 401-404, where the field 401 is configured to set a stroke tolerance value; the field 402 is configured to set a text completion time; the field 403 is configured to set a correct rate threshold with a unit of percentage (%); the field 404 is configured to set a number of practices of a single text. The above practice setting includes values in the fields 401-404. The values in the fields 401-404 will be explained in the following paragraphs. The processing device 201 of the teaching device 210 executes the virtual whiteboard program and transmits the practice setting to the server 240.

Referring to FIG. 3, in step 325, the server 240 stores the practice setting. In addition, the server 240 further obtains at least one model text provided by the teaching device 210. The model text is configured to instruct how to write a text. The model text includes data such as an order of text strokes, positions of the text strokes, a time used for writing the text, etc. In detail, the processing device 201 of the teaching device 210 executes the virtual whiteboard program, and the teacher 110 enters an account to log into the server 240. The teacher 110 may input the model text through the teaching device 210, and transmit the model text to the server 240 through the communication interface 204 of the teaching device 210. The teacher 110 uses a stylus to write text, and the processing device 201 of the teaching device 210 executes the virtual whiteboard program to generate the model text.

For example, FIG. 5 is a schematic diagram of model texts. In FIG. 5, model texts 501-504 are shown, where the model text 501 is about English letters "A" and "a"; the model text 502 is about English letters "B" and "b"; the model text 503 is about a Chinese character " 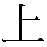 "; and the model text 504 is about a Chinese character " 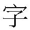 ". Each model text contains at least one model stroke, each model stroke contains a plurality of model points, and each model point has an X coordinate value and a Y coordinate value. In addition, the model text further includes information such as an order of each model stroke, coordinate values of a start point and an end point of each model stroke, etc. In some embodiments, the processing device 241 of the server 240 may obtain the model texts 501-504 from other databases through a network.

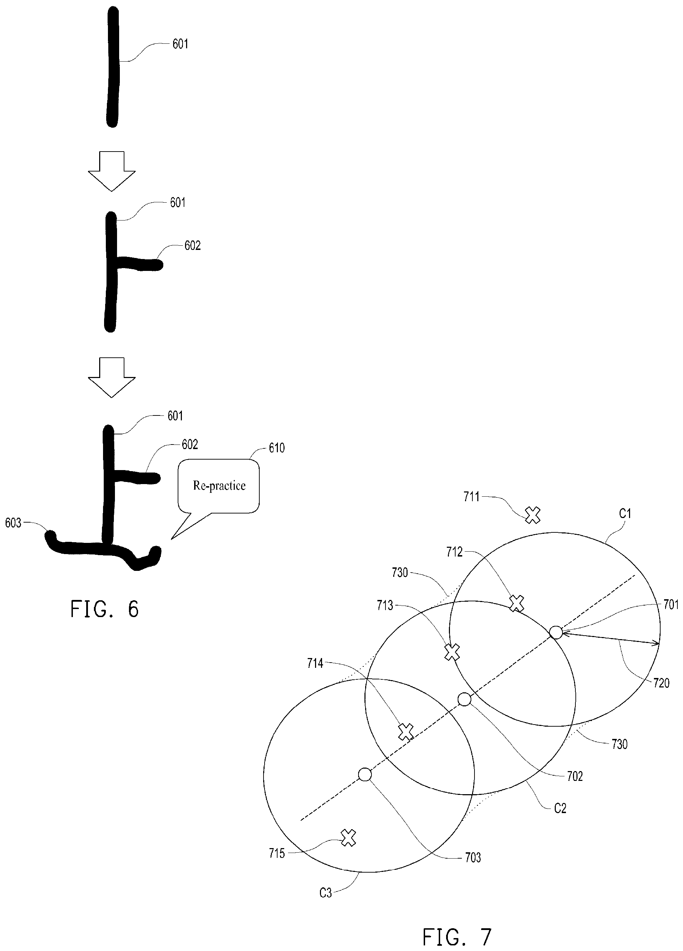

In step 326, the practitioner 120 receives a homework notification through the practicing device 230 and starts to do the homework. In step 327, the practicing device 230 of the practitioner 120 executes the virtual whiteboard program to log into the server 240. The display 207 of the practicing device 230 displays the virtual whiteboard window 310. The virtual whiteboard window 310 includes the user interface 231. The practitioner 120 uses a stylus to practice writing on the user interface 231, i.e., to write a text, and the processing device 205 of the practicing device 230 generates a practicing text. The practicing text includes at least one practicing stroke, and the practicing stroke includes a plurality of practicing points, and each of the practicing points has an X coordinate value and a Y coordinate value. FIG. 6 is a schematic diagram illustrating a practicing text according to an embodiment. Referring to FIG. 6, the practitioner 120 first writes down a practicing stroke 601, and then writes down practicing strokes 602 and 603 in sequence. The processing device 205 of the practicing device 230 obtains the practicing strokes input by the practitioner 120 through the user interface 231 and generates handwriting information. The handwriting information includes, for example, coordinate values of the practicing points and a time for writing the practicing stroke, so as to learn a start point coordinate value, an end point coordinate value of a practicing stroke, etc. In an embodiment, the handwriting information further includes a practicing text time that the practitioner 120 has performed, such as a total time from a first practicing point of the practicing stroke 601 to a last practicing point of the practicing stroke 603. The handwriting information may also be transmitted from the communication interface 208 of the practicing device 230 to the server 240 through the network 220.

In step 328 of FIG. 3, the server 240 determines whether the handwriting information is qualified according to the practice setting obtained from step 325 (It means that the server 240 determines whether the handwriting information complies with at least one of the practice settings), so as to generate an inspection result, and then transmits the inspection result to the practicing device 230. In the embodiment, the server 240 inspects three items, including a stroke order, a stroke range, and a practicing text time, which will be described one by one below.

In the embodiment, in step 327, the practicing device 230 of the practitioner 120 executes the virtual whiteboard program to log into the server 240, and the display 207 of the practicing device 230 displays the virtual whiteboard window 310, where the virtual whiteboard window 310 includes the user interface 231. The user interface 231 displays the model text. The practicing device 230 receives an operation of the stylus, and the operation of the stylus is performed on the user interface 231 displaying the model text. The practitioner 120 holds the stylus and writes the practicing text on the user interface 231 according to the strokes of the model text, i.e., the practitioner 120 copies the model text. A grayscale of the model text displayed on the user interface 231 is smaller than a grayscale of the practicing text, and the user interface 231 displays grid lines, making it easier for the practitioner 120 to write the practicing text.

Referring to FIG. 5 and FIG. 6, regarding the stroke order, taking the Chinese character " 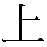 " as an example, the stroke order of the model text 503 is " 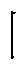 ", a short " 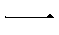 ", and a long " 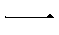 ". The user interface 231 only displays the model text 503 without any hint of the stroke order. As shown in FIG. 6, the practitioner 120 writes the practicing stroke 601 on the model stroke " 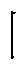 " of the model text 503, and the processing device 241 of the server 240 determines whether the coordinate values of the plurality of practicing points of the practicing stroke 601 conform to the coordinate values of the plurality of model points of the model stroke " 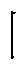 " of the model text 503. The above-mentioned conform is defined as a difference between the coordinate values of the practicing points and the coordinate values of the model points being within a value set by the stroke tolerance value 401.

If the practitioner 120 first writes the practicing stroke 602 on the short " 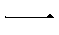 " of the model stroke of the model text 503, the processing device 241 of the server 240 determines that the coordinate values of the plurality of practicing points of the practicing stroke 602 do not conform to the coordinate values of the plurality of model points of the model stroke " 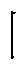 " of the model text 503, which represents that the handwriting information is unqualified (it means that the handwriting information does not comply with at least one of the practice settings), and the display 207 of the practicing device 230 displays a feedback message 610 to remind the practitioner 120 to rewrite the practicing stroke and delete the practicing stroke 602 previously written by the practitioner 120. Further, when the practitioner 120 writes the practicing stroke 603 on the long " 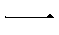 " of the model stroke of the model text 503, since the coordinate values of the plurality of practicing points of the practicing stroke 603 do not conform to the coordinate values of the plurality of model points of the long " 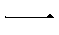 " of the model stroke of the model text 503, it represents that the handwriting information is unqualified (it means that the handwriting information does not comply with at least one of the practice settings), and the display 207 of the practicing device 230 displays the feedback message 610 to remind the practitioner 120 to rewrite the practicing stroke and delete the practicing stroke 603 previously written by the practitioner 120.

In an embodiment, in addition to determining the stroke order, a writing direction of the stroke may also be determined. In the above example, when the practicing stroke 601 is determined to be " 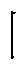 ", a start point coordinate value and an end point coordinate value of the practicing points may also be obtained, and the writing direction may be calculated according to the start point coordinate value and the end point coordinate value, and in this example, the start point coordinate value should be above the end point coordinate value (for example, a Y coordinate value of the start point coordinate value is smaller). If the start point coordinate value of the current practicing stroke 601 is not above the end point coordinate value, it is determined that the writing direction of the current practicing stroke 601 is wrong.

Regarding the stroke range, the server 240 determines whether the practicing text is qualified relative to the model text according to the stroke tolerance value in the field 401 of FIG. 4, so as to generate an inspection result. The server 240 determines whether the practicing text complies with the model text according to the stroke tolerance value in the field 401 of FIG. 4. The stroke tolerance value indicates an upper limit of a distance between the practicing stroke and the model stroke, and when the upper limit is exceeded, it means that the practicing stroke is unqualified (It means that the practicing stroke does not comply with the model stroke). Therefore, the larger the stroke tolerance value is, the easier it is to judge that the practicing stroke is qualified, and the smaller the stroke tolerance value is, the easier it is to judge that the practicing stroke is unqualified. Specifically, referring to FIG. 7, FIG. 7 is a schematic diagram of determining a stroke range according to an embodiment. FIG. 7 shows model points 701-703 of a model stroke, and practicing points 711-715 of a practicing stroke. The above-mentioned stroke tolerance value is taken as a length 720, and each of the model points 701-703 is taken as a circle center and the length 720 is taken as a radius to obtain circles C1-C3. A combination of these circles C1-C3 forms a stroke range. If a practicing point is within this stroke range, it means that a distance between the practicing point and the nearest model point is less than or equal to the stroke tolerance value, and if the practicing point is outside the stroke range, it means that the distance between the practicing point and the nearest model point is greater than the stroke tolerance value. Therefore, it may be determined whether each of the practicing points 711-715 is within the stroke range to determine whether the practicing stroke is qualified. In this example, the practicing point 711 is not within the stroke range (and therefore unqualified), while the practicing points 712-715 are within the stroke range (qualified).

In an embodiment, the display 203/207 of the practicing device 230 and the teaching device 210 have different resolutions and display scales. Therefore, the server 240 needs to convert the obtained resolutions and display scales before comparing the practicing strokes with the model strokes. For example, in the implementation of enabling a web browser, a window.devicePixelRatio function of a JavaScript programming language may be called to obtain device-independent pixels (DIPs) of the display and a length and a width of a display screen (where the display scale may be obtained). After conversion, in a same coordinate system, coordinate values of the practicing points in the practicing stroke may be compared with coordinate values of the model points in the model stroke, and the disclosure does not limit the conversion means used.

Referring to FIG. 4 and FIG. 7, a value in the field 403 is also referred to as a correct rate threshold, which is 80% in this example. After determining whether each of the practicing points 711-715 is within the stroke range, the server 240 may determine how many practicing points are within the stroke range among all practicing points 711-715. For example, a correct rate may be obtained by dividing the number of the practicing points within the stroke range by the number of all practicing points, and in this example, the correct rate is 4/5x100%=80%. Then, it is determined whether the correct rate is greater than the correct rate threshold. If so, the practicing stroke is determined to be qualified, otherwise, the practicing stroke is determined to be unqualified.

If the distance between the model points 701-703 is very close, an edge of the formed stroke range will be smoother and closer to a straight line. However, if the distance between the model points 701-703 is far, there will be a groove between two adjacent circles, which may affect judgment of qualification. Therefore, in some embodiments, a low-pass filter may be performed on the edge of the stroke range, for example, 5, 7, 9 or other number of edge points are taken at the edge of the stroke range, and then a mean filter is performed, and a stroke range 730 with smoother edges is formed after filtering.

In an embodiment, the above judgment may be performed for each practicing stroke, that is, if a correct rate of a practicing stroke is not greater than the correct rate threshold, the practicing stroke is unqualified. The inspection result generated by the server 240 is used to indicate which strokes are qualified and which are not. The practicing device 230 may provide a feedback message to the practitioner 120 based on the inspection result. For example, in the example of FIG. 6, the correct rate of the practicing stroke 603 is less than the correct rate threshold, and when the practicing device 230 receives the inspection result provided by the server 240, the display 203 of the practicing device 230 may display the feedback message 610 for instructing the practitioner 120 to practice again, and the practicing device 230 may also delete the practicing stroke 603, so that the practitioner 120 may write again. If the practitioner 120 fails the practice again, the feedback message 610 may be displayed repeatedly. In an embodiment, the setup window 400 of FIG. 4 may further include another field 404 for setting an upper limit of the number of practices. In an embodiment, the server 240 may also count the correct rate and a number of errors of each stroke to generate a report.

In the embodiment, the feedback message 610 is provided in the form of text, but in other embodiments, it may also be provided in the form of images or sounds, which is not limited by the disclosure. In other embodiments, the practicing device 230 may also set the content of the feedback message 610 to warn the practitioner of writing errors.

Regarding the practicing text time, the practicing device 230 starts timing from a time when a start coordinate point of the practicing stroke 601 is detected, and stops timing when a last practicing stroke is detected and the last practicing stroke is qualified, and a time elapsed during this period is referred to as the practicing text time. The number in the field 402 of FIG. 4 is also referred to as a target completion time. The server 240 may determine whether the practicing text time is greater than the target completion time, and if so, it is determined that the handwriting information is unqualified.

In addition, the number in the field 404 of FIG. 4 indicates how many times the text needs to be practiced, and the practicing device 230 may prompt the practitioner 120 to practice until the specified number of practice times is met. In an embodiment, the practicing device 230 may display a plurality of boxes and grids at one time for the practitioner 120 to practice, but the disclosure is not limited thereto.

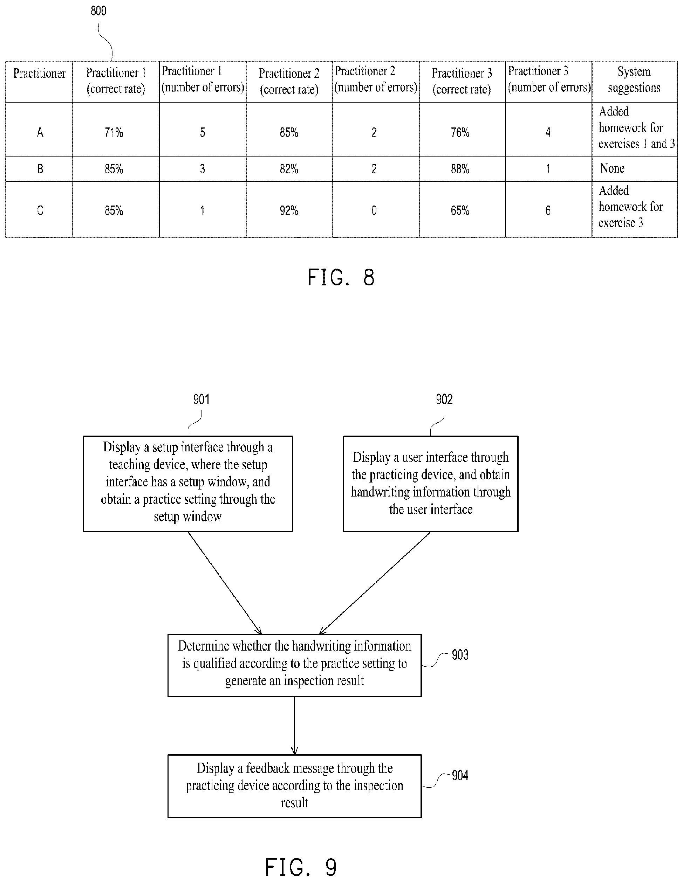

Referring back to FIG. 3, in step 329, the practitioner 120 completes and submits the homework. After submitting the homework, the practicing device 230 or the server 240 may send a notification to the teaching device 210. In step 330, the teacher 110 checks the notification through the teaching device 210 to learn that the practitioner 120 has completed the homework. In step 331, the server 240 generates a report related to the handwriting practice according to the inspection result of step 328. In an embodiment, the server 240 generates the report based on at least the number of errors and the correct rate of the practicing strokes corresponding to the handwriting information. FIG. 8 is a schematic diagram illustrating a report according to an embodiment. Referring to FIG. 8, a report 800 shows practicing results of three practitioners, taking practitioner A as an example, a correct rate in a first practicing is 71%, and a number of errors is 5; the correct rate in a second practicing is 85%, and the number of errors is 2; the correct rate in a third practicing is 76%, and the number of errors is 4, and the report 800 also includes handwriting system suggestions, and the contents included in the report 800 are not limited by disclosure.

In an embodiment, the server 240 may obtain a target correct rate, and the target correct rate may be a preset value or may be set by the teacher (for example, included in the practice setting). For each practice, the server 240 may determine whether the corresponding correct rate is less than the target correct rate, and if so, the server 240 may recommend adding homework to the teaching device 210. For example, in this example, the target correct rate is 80%, the correct rates of the practitioner A in exercise 1 and exercise 3 are all lower than the target correct rate, and the server 240 may suggest adding a homework of the exercise 1 and the exercise 3 in the last field of the report 800. The correct rate of the practitioner C in the exercise 3 is lower than the target correct rate, so that the server 240 may suggest adding a homework of the exercise 3 in the last field of the report 800. Finally, the server 240 may transmit the report 800 to the teaching device 210.

In step 332, the teacher 110 obtains the report, and then provides a result and suggestions to the practitioner 120 in step 333.

FIG. 9 is a schematic diagram illustrating a handwriting method according to an embodiment. Referring to FIG. 9, in step 901, a setup interface is displayed through a teaching device, where the setup interface has a setup window, and a practice setting is obtained through the setup window. In step 902, a user interface is displayed through the practicing device, and handwriting information is obtained through the user interface. In step 903, it is determined whether the handwriting information is qualified according to the practice setting to generate an inspection result. In step 904, a feedback message is displayed through the practicing device according to the inspection result. The steps in FIG. 9 have been described in detail above, and details thereof are not repeated. It should be noted that each step in FIG. 9 may be achieved by a processing device by executing a plurality of programs or circuits, and the disclosure is not limited thereto.

In an embodiment, which is not shown, the virtual whiteboard program executed by the processing device 201/205 of the teaching device 210 or the practicing device 230 may achieve functions as that of the virtual whiteboard program executed by the processing device 241 of the server 240. The detailed description is as follows. The teaching device 210 or the practicing device 230 may be a terminal device, and by using the processing device of the terminal device to access and execute the virtual whiteboard program, the display of the terminal device may display the virtual whiteboard window.

The processing device of the terminal device generates class content data according to the class content, and transmits the class content data to another terminal device via the network.

The processing device of the terminal device executes the virtual whiteboard program, and the display of the terminal device may display a virtual whiteboard window. The virtual whiteboard window includes a setup interface, and the setup interface has a setup window. The terminal device obtains a practice setting through the setup window.

A storage medium of the terminal device stores the practice setting and at least one model text. The terminal device also obtains at least one model text, which is used to instruct how to write a text. The model text, for example, includes information such as a stroke order, positions of text strokes, a time of writing the text, etc. A stylus may be used to write the text, and the processing device of the terminal device may be used to execute the virtual whiteboard program to generate the model text.

In some embodiments, the processing device of the terminal device may obtain the model text from other databases through a network.

The display of the terminal device displays the virtual whiteboard window, and the virtual whiteboard window further includes a user interface. When the user performs a handwriting practice, the user writes a text on the user interface by using the stylus, and the processing device of the terminal device generates handwriting information according to the practicing text.

The virtual whiteboard program executed by the processing device of the terminal device determines whether the handwriting information is qualified according to the practice setting to generate an inspection result. The display of the terminal device may display the inspection results. In addition, the display of the terminal device may display feedback message. The processing device of the terminal device also counts a correct rate and a number of errors of each stroke to generate a report. Detailed steps for determining whether the handwriting information is qualified and how to generate the report are as described above, which will not be repeated here.

In summary, the handwriting system and the handwriting method of the embodiments of the disclosure aim to solve the technical problem of how to accurately determine whether the coordinate values of the strokes written by the practitioner are within a stroke tolerance range of the coordinate values of the model strokes, and how to instantly determine whether an order of the practicing strokes written by the practitioner is correct according to the order of the model strokes, and remind the practitioner of the errors of the practicing strokes. In addition, the handwriting system and the handwriting method of the embodiments of the disclosure have at least one of the following advantages. The teacher may set relevant practice settings by himself, such as the stroke tolerance value, etc., and based on these settings, it is determined whether the practicing strokes are qualified. When practicing handwriting, the practitioner may also get instant feedback or practice again, and finally a report is generated based on the practicing process. By doing this, the teacher may better grasp a practice situation, and practitioners may also correct their own handwritings in real time.

However, the above description is only a preferred embodiment of the disclosure and should not be used to limit the scope of the disclosure. In other words, any simple equivalent changes and modifications made according to the scope of the patent application and the content of the disclosure description of the disclosure are still within the scope of the disclosure. In addition, any embodiment of or the claims of the disclosure is unnecessary to implement all advantages or features disclosed by the disclosure. Moreover, the abstract and the name of the disclosure are only used to assist patent searching, and are not used to limit a range of the claims of the disclosure. Moreover, "first", "second", etc., mentioned in the specification and the claims are merely used to name the elements and should not be regarded as limiting the upper or lower bound of the number of the components/devices.

## Claims

1. A handwriting system, comprising:
a teaching device (210), communicatively connected to a network (220), and configured to display a setup interface (211), wherein the setup interface (211) comprises a setup window (400), and the teaching device (210) is configured to obtain a practice setting through the setup window (400), and transmit the practice setting to the network (220); and
a practicing device (230), communicatively connected to the network (220), wherein the practicing device (230) is configured to display a user interface (231), and the practicing device (230) is configured to obtain handwriting information through the user interface (231), and transmit the handwriting information to the network (220),
wherein the practicing device (230) is configured to receive an inspection result from the network (220), and the practicing device (230) is configured to display a feedback message (610) according to the inspection result.

2. The handwriting system according to claim 1, further comprising:
a server (240), communicatively connected to the teaching device (210) and the practicing device (230) respectively through the network (220),
wherein the server (240) is configured to determine whether the handwriting information is qualified according to the practice setting to generate the inspection result, and transmit the inspection result to the practicing device (230) and
wherein the server (240) is configured to generate a report and transmit the report to the teaching device (210), and the teaching device (210) is configured to display a report, and the report comprises at least one of a correct rate, a number of errors, and suggested content.

3. The handwriting system according to claim 2, wherein the practice setting comprises a stroke tolerance value (401), and the handwriting information comprises a practicing stroke (601, 602, 603),
wherein the server (240) is configured to obtain a model text (503), the model text (503) comprises at least one model stroke, and the server (240) is configured to determine whether the practicing stroke (601, 602, 603) is qualified relative to the model stroke according to the stroke tolerance value (401) to generate the inspection result.

4. The handwriting system according to claim 3, wherein the practicing stroke (601, 602, 603) comprises a plurality of practicing points (711-715), and the model stroke comprises a plurality of model points,
wherein the server (240) is configured to take the stroke tolerance value (401) as a distance to generate a stroke range corresponding to the model points, and determine whether the practicing points (711-715) are within the stroke range to determine whether the practicing stroke (601, 602, 603) is qualified.

5. The handwriting system according to claim 4, wherein the practice setting comprises a correct rate threshold,
wherein the server (240) is configured to determine a correct rate of the practicing points (711-715), wherein if the correct rate is greater than the correct rate threshold, the server (240) determines that the practicing stroke (601, 602, 603) is qualified.

6. The handwriting system according to claim 3, wherein the practice setting comprises a target completion time, and the handwriting information comprises a practicing text time,
wherein the server (240) is configured to determine whether the practicing text time is greater than the target completion time, and if yes, the server (240) determines that the handwriting information is unqualified.

7. The handwriting system according to any one of the preceding claims 3-6, wherein the user interface (231) is configured to display the model text (503), and the practicing device (230) is configured to receive an operation of a stylus, wherein the operation of the stylus is performed on the user interface (231) displaying the model text (503) to generate the handwriting information.

8. A handwriting method applicable to a handwriting system, the handwriting system comprising a teaching device (210) and a practicing device (230), and the handwriting method comprising:
displaying (901) a setup interface (211) through the teaching device (210), the setup interface (211) comprising a setup window (400), and obtaining a practice setting through the setup window (400);
displaying (902) a user interface (231) through the practicing device (230), and obtaining handwriting information through the user interface (231);
determining (933) whether the handwriting information is qualified according to the practice setting to generate an inspection result; and
displaying (904) a feedback message (610) through the practicing device (230) according to the inspection result.

9. The handwriting method according to claim 8, wherein the practice setting comprises a stroke tolerance value (401), and the handwriting information comprises a practicing stroke (601, 602, 603), wherein determining (933) whether the handwriting information is qualified according to the practice setting to generate the inspection result further comprises a step of:
obtaining a model text (503), the model text (503) comprising at least one model stroke, and determining whether the practicing stroke (601, 602, 603) is qualified relative to the model stroke according to the stroke tolerance value (401) to generate the inspection result.

10. The handwriting method according to claim 9, wherein the practicing stroke (601, 602, 603) comprises a plurality of practicing points (711-715), the model stroke comprises a plurality of model points, and the handwriting method further comprises:
taking the stroke tolerance value (401) as a distance to generate a stroke range corresponding to the model points, and determining whether the practicing points are within the stroke range to determine whether the practicing stroke (601, 602, 603) is qualified.

11. The handwriting method according to claim 10, wherein the practice setting comprises a correct rate threshold, and the handwriting method further comprises:
determining a correct rate of the practicing points (711-715); and
determining that the practicing stroke (601, 602, 603) is qualified if the correct rate is greater than the correct rate threshold.

12. The handwriting method according to claim 9, wherein the practice setting comprises a target completion time, the handwriting information comprises a practicing text time, and the handwriting method further comprises:
determining whether the practicing text time is greater than the target completion time, and if yes, determining that the handwriting information is unqualified.

13. The handwriting method according to claim 9, further comprising:
displaying the user interface (231) through the practicing device (230), wherein the user interface (231) is configured to display the model text (503); and
receiving an operation of a stylus, wherein the operation of the stylus is performed on the user interface (231) displaying the model text (503) to generate the handwriting information.

14. A handwriting system, comprising a terminal device configured to display a setup interface (211), wherein the setup interface (211) comprises:
a setup window (400) configured to receive a practice setting;
a user interface (231) configured to be displayed by the terminal device and receive handwriting information,
the terminal device is configured to receive an inspection result, and display a feedback message (610) according to the inspection result.

15. A non-transitory processing device-readable medium, configured to store a virtual whiteboard program to perform a handwriting method comprising:
displaying (901) a setup interface (211), the setup interface (211) comprising a setup window (400), and obtaining a practice setting through the setup window (400);
displaying (902) a user interface (231), and obtaining handwriting information through the user interface (231);
determining (933) whether the handwriting information is qualified according to the practice setting to generate an inspection result; and
displaying (904) a feedback message (610) according to the inspection result.
